(19) **Europäisches Patentamt**

**European Patent Office**

**Office européen des brevets**

(11) **EP 1 152 128 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
*F01L 9/04* (2006.01)     *F02D 13/02* (2006.01)

(21) Anmeldenummer: **01108706.1**

(22) Anmeldetag: **06.04.2001**

(54) **Verfahren und Vorrichtung zur elektronischen Steuerung von Aktuatoren einer Brennkraftmaschine mit variabler Gaswechselsteuerung**

Method and apparatus for electronically controlling a variable valve drive device

Procédé et dispositif de commande d'un système de variation de calage de soupapes

(84) Benannte Vertragsstaaten:
**DE FR GB**

(30) Priorität: **29.04.2000 DE 10021132**

(43) Veröffentlichungstag der Anmeldung:
**07.11.2001 Patentblatt 2001/45**

(73) Patentinhaber: **Bayerische Motoren Werke Aktiengesellschaft**
**80809 München (DE)**

(72) Erfinder:
• **Krämer, Gerd**
**82065 Baierbrunn (DE)**
• **Rekewitz, Gert**
**83607 Holzkirchen (DE)**
• **Meder, Georg**
**80331 München (DE)**
• **Beattie, Tim**
**CV32 5QX Leamington Spa (GB)**

(56) Entgegenhaltungen:
EP-A- 0 445 555     EP-A- 0 651 149
DE-A- 4 325 902     DE-A- 19 753 969
DE-A- 19 844 086     DE-C- 19 844 085

EP 1 152 128 B1

**Beschreibung**

Die Erfindung bezieht sich auf ein Verfahren und eine Vorrichtung zur elektronischen Steuerung von Aktuatoren einer Brennkraftmaschine mit variabler Gaswechselsteuerung nach dem Oberbegriff des Patentanspruchs 1 und nach dem Oberbegriff des Patentanspruchs 3.

Aus der DE 197 53 969 A1 ist ein Verfahren und eine Vorrichtung zur elektronischen Steuerung von Aktuatoren einer Brennkraftmaschine mit variabler Gaswechselsteuerung bekannt, wonach die Zylinderfüllung als lineare Funktion des Saugrohrdruckes abgebildet wird und abhängig von der Ventilüberschneidungsfläche bestimmt wird.

Zum weiteren technischen Hintergrund bezüglich der Lage der Ventilüberschneidungsfläche wird auf die DE 198 44 085 C1 hingewiesen.

Ein weiteres Verfahren und eine weitere Vorrichtung zur elektronischen Steuerung von Aktuatoren einer Brennkraftmaschine mit variabler Gaswechselsteuerung ist insbesondere aus der DE 43 25 902 A1 bekannt. Aktuatoren der Brennkraftmaschine sind dabei z. B. eine Drosselklappe, Einspritzventile und mindestens ein Stellmotor zur Nockenwellenverdrehung und/ oder Nockenwellenumschaltung. Ein Beispiel für eine Nockenwellenverdrehung und/oder eine Nockenwellenumschaltung zur stufenlosen Änderung der Ventilsteuerzeit und des Ventilhubes ist auf den Seiten 246 und 247 des Fachbuches "Autoelektrik, Autoelektronik am Ottomotor", Bosch, VDI-Verlag, 1994, beschrieben. Die Änderung des Ventilhubes ist auch unter dem Begriff variabler Ventiltrieb (VVT) bekannt. Die Änderung der Ventilsteuerzeiten (insbesondere der Öffnungszeiten der Einlaß- und/oder Auslaßventile bezogen auf den Kurbelwellenwinkel) ist auch unter dem Begriff variable Nockenwellenverstellung (VANOS) bekannt. In Zukunft sollen Steuerzeit- und Ventilhubänderungen bei Brennkraftmaschinen vorzugsweise überlagert werden.

Wichtig bei derartigen Brennkraftmaschinensystemen ist entweder die korrekte Berechnung der Zylinderfüllung abhängig vom momentanen Saugrohrdruck, insbesondere für die Berechnung der Kraftstoffeinspritzmenge oder die korrekte Berechnung des zum Erreichen einer Soll-Zylinderfüllung benötigten Saugrohrdruckes, der mittels der Drosselklappe eingestellt wird. Hierzu ist aus der DE 43 25 902 A1 ein sog. Saugrohrdruckmodell bekannt, bei dem der Zusammenhang zwischen Zylinderfüllung und Saugrohrdruck durch eine Gerade mit Steigung und Offset beschrieben wird. Die Steigung und der Offset werden dabei insbesondere abhängig von der Ventilüberschneidung, d. h. dem Kurbelwellenwinkelbereich, über den ein Einlaßventil und ein Auslaßventil eines Zylinders gemeinsam geöffnet sind, bestimmt. Dieses Verfahren ist jedoch insbesondere bei einer Überlagerung der Steuerzeit- und Ventilhubänderungen zu ungenau.

Es ist daher Aufgabe der Erfindung ein Verfahren bzw. eine Vorrichtung eingangs genannter Art im Hinblick auf die Genauigkeit und die Flexibilität der Steuermaßnahmen zu verbessern.

Diese Aufgabe wird durch die Merkmale der Patentansprüche gelöst.

Der Erfindung liegt die Erkenntnis zugrunde, daß das Saugrohrmodell beibehalten werden kann, aber von der Art der Gaswechselsteuerung unabhängig wird, wenn die Steigung und/oder der Offset der Gerade, die dem Saugrohrdruckmodell zugrundeliegt, abhängig von der Ventilüberschneidungsfläche bestimmt wird. Besonders genau wird die erfindungsgemäße Steuerung, wenn zur Ventilüberschneidungsfläche selbst auch deren Lage, insbesondere mit Bezug auf einen definierten Kurbelwellenwinkel, berücksichtigt wird.

Aufgrund der Erfindung muß bei Verwendung des bekannten Saugrohrdruckmodells trotz erweiterter Brennkraftmaschinenfunktionen nicht berücksichtigt werden, ob eine Ventilhubänderung, eine Steuerzeitenänderung oder beides vorgenommen wird. Weiterhin muß nicht berücksichtigt werden, ob die Auslaßventile, die Einlaßventile oder beide Ventilarten beeinflußt werden. Hierdurch wird ein einfaches, aber flexibles System geschaffen.

In der Zeichnung ist ein Ausführungsbeispiel der Erfindung dargestellt. Es zeigt

Fig. 1    den Ventilhubverlauf bei einer Gaswechselsteuerung ohne Ventilhubänderung

Fig. 2    den Ventilhubverlauf bei einer Gaswechselsteuerung mit Ventilhubänderung und

Fig. 3    eine mögliche Ausführungsform des erfindungsgemäßen Verfahrens, das beispielsweise in einem ohnehin vorhandenen elektronischen Brennkraftmaschinen-Steuergerät integriert werden kann.

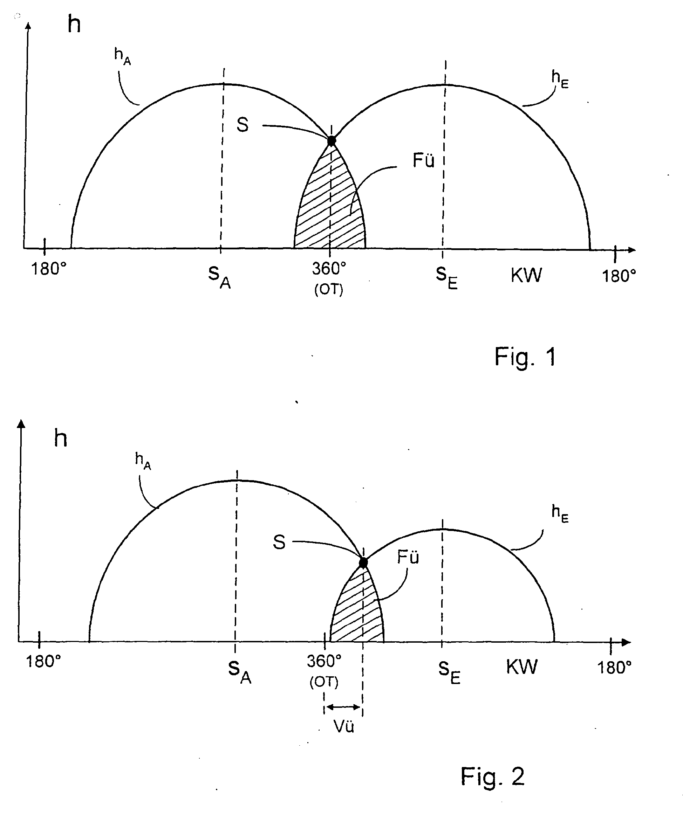

In den Figuren 1 und 2 sind auf der Abszisse jeweils der Kurbelwellenwinkel KW und auf der Ordinate jeweils der Ventilhub h aufgetragen. Die Figuren 1 und 2 zeigen die Ventilhubverläufe $h_A$ und $h_E$ des Auslaßventils und des Einlaßventils eines Zylinders, auch Ventilerhebungskurven genannt.

Die Ventilüberschneidungsfläche Fü ist die Schnittfläche (vgl. Schraffur) der beiden Flächen, die jeweils durch die Ventilhubverläufe $h_A$ bzw. $h_E$ sowie durch die Abszisse eingeschlossen werden. Die Lage der Ventilüberschneidungsfläche Fü wird durch den Abstand Vü des Schwerpunktes S der Ventilüberschneidungsfläche Fü zu einem Referenz-Kurbelwellenwinkel, hier dem sog. oberen Totpunkt OT, bestimmt. Der obere Totpunkt OT liegt bei einem Kurbelwellenwinkel KW von 360°. Der Schwerpunkt S der Ventilüberschneidungsfläche Fü entspricht dem Schnittpunkt der Ventilhubverläufe $h_A$ und $h_E$.

Für die Erfindung ist es unerheblich, ob nur eine Ventilsteuerzeifireränderung, wie in Fig. 1 dargestellt, oder ob ggf. zusätzlich eine Ventilhubänderung, wie bei dem Einlaßventil in Fig. 2 dargestellt, vorgenommen wird.

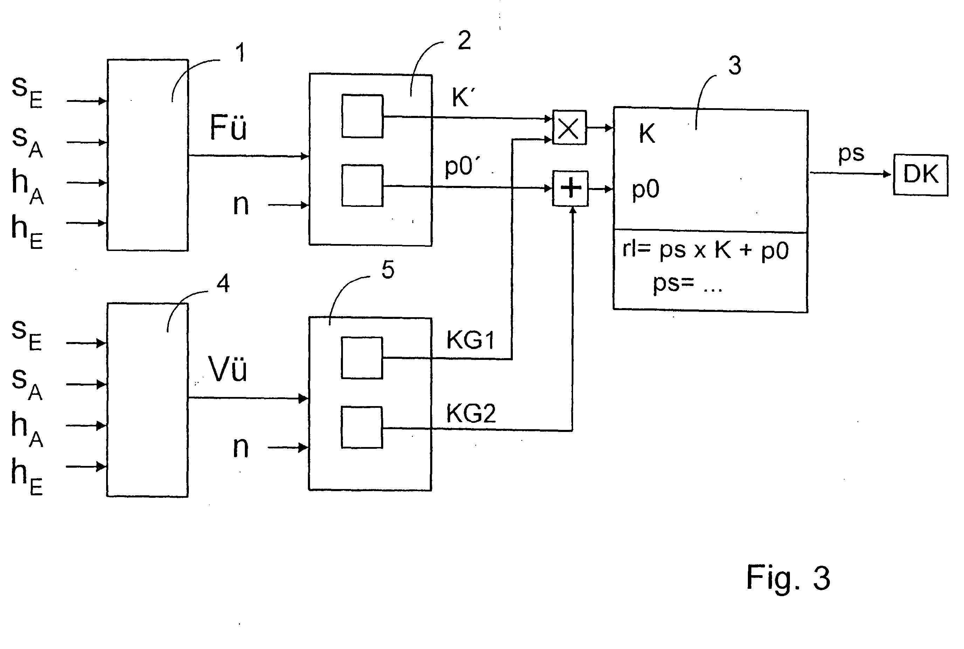

Fig. 3 zeigt ein Ausführungsbeispiel für das erfindungsgemäße Verfahren und die erfindungsgemäße Vorrichtung als Teil eines Steuergerätes (hier nicht dargestellt).

Grundsätzlich wird von dem bekannten, eine Gerade beschreibenden Saugrohrdruckmodell ausgegangen:

$$ rl = ps \times K + p0 \quad , $$

wobei

rl      die Zylinderfüllung,
ps      der Saugrohrdruck,
K       die Steigung der Gerade und
p0      der Offset der Gerade

ist. (vgl. hierzu auch Fig. 2 der DE 43 25 902 A1)

Bei dem erfindungsgemäßen Ausführungsbeispiel wird die Steigung K und der Offset p0 abhängig von der Ventilüberschneidungsfläche Fü und der Lage der Ventilüberschneidungsfläche Fü bestimmt. Die Lage der Ventilüberschneidungsfläche Fü wird durch den Abstand Vü des Schwerpunktes S der Ventilüberschneidungsfläche Fü zum Kurbelwellenwinkel 360° (=OT) bestimmt (vgl. Fig. 1 und Fig. 2).

Die Einlaßspreizung $s_E$, die Auslaßspreizung $s_A$, der Einlaßventilhub $h_E$ und der Auslaßventilhub $h_A$ sind Eingangssignale der Flächenberechnungseinheit 1 und der Lageberechnungseinheit 4. Unter Spreizung ($s_E$, $s_A$) wird insbesondere der Kurbelwellenwinkel KW am jeweiligen Maximum der Ventilhubverläufe $h_A$ und $h_E$ verstanden. Die Einlaßspreizung $s_E$ und die Auslaßspreizung $S_A$ dienen beispielsweise bezogen auf den Referenz-Kurbelwellenwinkel bei OT als Maß für die Änderungen der Ventilsteuerzeiten. Abhängig von diesen Eingangssignalen wird zum einen die Ventilüberschneidungsfläche Fü, z. B. mittels der Flächenberechnungsmethode nach Hardenberg, bestimmt. Zum anderen wird abhängig von denselben Eingangssignalen die Lage der Ventilüberschneidungsfläche Fü bestimmt. Die Lage der Ventilüberschneidungsfläche Fü wird als Abstandes Vü des Flächen-Schwerpunktes S von dem dem oberen Totpunkt OT zugeordneten Kurbelwellenwinkel KW definiert. (Fig. 1, Fig. 2)

Die Ventilüberschneidungsfläche Fü und die Drehzahl n der Brennkraftmaschine sind Eingangssignale einer Kennfeldeinheit 2, deren Ausgangssignale ein Steigungsgrundwert K' und ein Offsetgrundwert p0' sind.

Die Lage der Ventilüberschneidungsfläche Fü in Form des Abstandes Vü und die Drehzahl der Brennkraftmaschine sind Eingangssignale der Korrekturberechnungseinheit 5, deren Ausgangssignale ein steigungsbezogener Korrekturfaktor KG1 und ein offsetbezogener Korrekturwert KG2 sind.

Der steigungsbezogene Korrekturfaktor KG1 wird mit dem Steigungsgrundwert K' multipliziert. Ergebnis dieser Multiplikation ist die Steigung K der Geradengleichung des Saugrohrdruckmodells. Der offsetbezogenen Korrekturwert KG2 wird mit dem Offsetgrundwert p0' addiert. Ergebnis dieser Addition ist der Offset p0 der Geradengleichung des Saugrohrdruckmodells.

In der Druckberechnungseinheit 3 ist das Saugrohrdruckmodell in Form der oben genannten Geraden abgelegt. Bei vorgegebener Soll-Zylinderfüllung rl wird die Gleichung nach dem Saugrohrdruck ps aufgelöst. Anschließend wird die Drosselklappe DK derart angesteuert, daß dieser Saugrohrdruck ps erreicht wird.

**Patentansprüche**

1. Verfahren zur elektronischen Steuerung von Aktuatoren einer Brennkraftmaschine mit variabler Gaswechselsteuerung mittels eines Saugrohrdruckmodells, bei dem der Zusammenhang zwischen Zylinderfüllung und Saugrohrdruck durch eine Gerade mit Steigung und Offset beschrieben wird, wobei die Steigung (K) und/oder der Offset (p0) abhängig von der Ventilüberschneidungsfläche (Fü) bestimmt werden, **dadurch gekennzeichnet, daß** die Steigung (K) und/oder der Offset (p0) auch abhängig von der Lage der Ventilüberschneidungsfläche (Fü) bestimmt werden.

2. Verfahren nach Patentanspruch 1, **dadurch gekennzeichnet, daß** die Lage der Ventilüberschneidungsfläche (Fü) durch den Abstand (Vü) des Schwerpunktes (S) der Ventilüberschneidungsfläche (Fü) zu einem Referenz-Kurbelwellenwinkel (OT) bestimmt wird.

3. Vorrichtung zur elektronischen Steuerung von Aktuatoren einer Brennkraftmaschine mit variabler Gaswechselsteuerung und mit einem Steuergerät, das ein Saugrohrdruckmodell enthält, bei dem der Zusammenhang zwischen Zylinderfüllung und Saugrohrdruck durch eine Gerade mit Steigung und Offset beschrieben ist, wobei Mittel (1, 2) vorgesehen sind, durch die die Steigung (K) und/oder der Offset (p0) abhängig von der Ventilüberschneidungsfläche (Fü) bestimmt werden, **dadurch gekennzeichnet, daß** Mittel (4, 5) vorgesehen sind, durch die die Steigung (K) und/oder der Offset (p0) auch abhängig von der Lage der Ventilüberschneidungsfläche (Fü) bestimmt werden.

4. Vorrichtung nach Patentanspruch 3, **dadurch gekennzeichnet, daß** Mittel (4, 5) vorgesehen sind, durch die die Lage der Ventilüberschneidungsfläche (Fü) durch den Abstand (Vü) des Schwerpunktes (S) der Ventilüberschneidungsfläche (Fü) zu einem Referenz-Kurbelwellenwinkel (OT) bestimmt wird.

## Claims

1. A method of electronic control of actuators of an internal combustion engine with variable gas change control, via an intake manifold pressure model wherein the relation between the cylinder charge and the intake manifold pressure is described by a straight line with a gradient and offset, wherein the gradient (K) and/or the offset (pO) are determined in dependence on the valve overlap surface (Fü), **characterised in that** the gradient (K) and/or the offset (pO) are also determined in dependence on the position of the valve overlap surface (Fü).

2. A method according to claim 1, **characterised in that** the position of the valve overlap surface (Fü) is determined by the distance (Vü) between the centre of gravity (S) of the valve overlap surface (Fü) and a reference crankshaft angle (OT).

3. A device for electronic control of actuators of an internal combustion engine with variable gas change control and with a control unit containing an intake manifold pressure model, wherein the relation between the cylinder charge and the intake manifold pressure is described by a straight line with a gradient and offset, wherein means (1, 2) are provided for determining the gradient (K) and/or offset (pO) in dependence on the valve overlap surface (Fü), **characterised in that** means (4, 5) are provided whereby the gradient (K) and/or the offset (pO) can also be determined independently of the position of the valve overlap surface (Fü).

4. A device according to claim 3, **characterised in that** means (4, 5) are provided whereby the position of the valve overlap surface (Fü) is determined by the distance (Vü) between the centre of gravity (S) of the valve overlap surface (Fü) and a reference crankshaft angle (OT).

## Revendications

1. Procédé de commande électronique d'actionneurs d'un moteur à combustion interne comprenant une commande variable d'échange gazeux à l'aide d'un modèle de pression du collecteur d'admission, selon lequel la relation entre le remplissage des cylindres et la pression du collecteur d'admission est décrite par une droite avec une pente et un décalage, la pente (K) et/ou le décalage (p0) étant définis en fonction de la surface de chevauchement des soupapes (Fü),
**caractérisé en ce que**

la pente (K) et/ou le décalage (pO) sont également définis en fonction de la position de la surface de chevauchement des soupapes (Fü).

2. Procédé selon la revendication 1,
**caractérisé en ce que**
la position de la surface de chevauchement des soupapes (Fü) est définie par la distance (Vü) du centre de gravité (S) de la surface de chevauchement des soupapes (Fü) par rapport à un angle de référence du vilebrequin (OT).

3. Dispositif de commande électronique d'actionneurs d'un moteur à combustion interne comportant une commande variable d'échange gazeux et comprenant un appareil de commande qui contient un modèle de pression du collecteur d'admission, et dans lequel la relation entre le remplissage des cylindres et la pression du collecteur d'admission est décrite par une droite avec une pente et un décalage, des moyens (1,2) étant prévus pour définir la pente (K) et/ou le décalage (p0) en fonction de la surface de chevauchement des soupapes (Fü),
**caractérisé par**
des moyens (4, 5) pour définir la pente (K) et/ou le décalage (pO) également en fonction de la position de la surface de chevauchement des soupapes (Fü).

4. Dispositif selon la revendication 3,
**caractérisé par**
des moyens (4, 5) pour définir la position de la surface de chevauchement des soupapes (Fü) par la distance (Vü) du centre de gravité (S) de la surface de chevauchement des soupapes (Fü) par rapport à un angle de référence du vilebrequin (OT).

Fig. 1

Fig. 2

Fig. 3

EP 1 152 128 B1